# EUROPEAN PATENT APPLICATION

(11) **EP 2 704 508 A1**
(43) Date of publication of application: **05.03.2014**
(21) Application number: 12776717.6
(22) Date of filing: 04.04.2012
(51) Int. Cl.: H04W 72/12, H04W 72/14

(54) **BASE STATION IN MOBILE COMMUNICATION SYSTEM, AND RESOURCE ALLOCATION METHOD**

(30) Priority: 28.04.2011 JP 2011101948
(71) Applicant: NTT DOCOMO, INC., Chiyoda-ku Tokyo 100-6150 (JP)
(72) Inventor: KITOU, Rika, Tokyo 100-6150 (JP); KIYOSHIMA, Kohei, Tokyo 100-6150 (JP); OOKUBO, Naoto, Tokyo 100-6150 (JP); ISHII, Hiroyuki, Tokyo 100-6150 (JP); OFUJI, Yoshiaki, Tokyo 100-6150 (JP); IWAMURA, Mikio, Tokyo 100-6150 (JP); UMESH, Anil, Tokyo 100-6150 (JP)
(74) Representative: HOFFMANN EITLE
(86) International application number: PCT/JP2012/059265
(87) International publication number: WO 2012/147479

(57) **Abstract**

A base station of a mobile communication system includes a scheduler that generates uplink grant information indicating that uplink radio resources are allocated to less than or equal to a first multiplexing number of units of user equipment, a transmitter that transmits a control signal including the uplink grant information to the user equipment, and a receiver that receives an uplink signal which is transmitted by the user equipment. When a second multiplexing number being less than the first multiplexing number or more units of the user equipment exist which transmit periodically generated periodic data, and when the user equipment exists which transmits non-periodic data generated at non-periodic timing, the scheduler generates the uplink grant information indicating that the uplink radio resources are allocated to the second multiplexing number of the units of the user equipment that transmit periodic data and to the user equipment that transmits non-periodic data.

## Description

### TECHNICAL FIELD

The present invention relates to a base station and a resource allocation method of a mobile communication system.

### BACKGROUND ART

As a technique for improving frequency utilization efficiency of a mobile communication system, there is frequency scheduling.

For a case of a dynamic scheduling method, radio resources are dynamically allocated to a user, depending on priority corresponding to a type of data and whether a radio channel state is good. For example, a determination is made for every subframe of 1 ms as to which radio resource is to be allocated to which user. Since a manner of allocating the radio resources to the user frequently changes, the radio resources can be flexibly utilized.

There are various types of data which are exchanged by a user. The various types of data include data such that an amount of the data is small but latency of the data is restricted to be small, such as voice data or a voice packet (VoIP); and data such that an amount of the data is large but latency of the data is not restricted to be so small, such as data communication. For a case of the voice data (VoIP), a small amount of data is periodically generated. When scheduling is performed for such voice data in accordance with the dynamic scheduling method, it is required to specify a radio resource for each voice data, which is the periodically generated small amount of data, on a one-by-one basis. In this case, signaling overhead which is required for notifying users of the radio resources becomes large relative to the whole data to be transmitted. Thus, it is possible that the utilization efficiency of the radio resources is lowered.

A semi-persistent scheduling (SPS) method is a method which can address such a concern. For a case of the semi-persistent scheduling method, allocation of radio resources for one time is applied not only to one subframe, but also to a subsequent great number of subframes. Namely, by periodically allocating fixed radio resources, the overhead can be reduced which is required for signaling of the radio resources. Accordingly, if all units of user equipment of the mobile communication system conform to the semi-persistent scheduling (SPS) method, the above-described concern can be resolved by using the SPS for the voice data.

However, since the semi-persistent scheduling (SPS) method is not mandatory for the 3GPP standards, it is not always true that user equipment of the mobile communication system conforms to the semi-persistent scheduling method. For the case where not all the units of user equipment conform to the SPS, it may be necessary to perform allocation of the radio resources by the dynamic scheduling method after all. However, in this case, it may be required to specify radio resources for each voice data, which is the periodically generated small amount of data, on a one-by-one basis. Consequently, the overhead may become large. In addition, a problem of concern is that the radio resources may not be effectively utilized.

Here, an amount of the overhead is not constant. For a case of an LTE-based mobile communication system, one through three symbols are allocated to a control signal (e.g., a PCFICH, a PHICH, and a PDCCH) (overhead) in one subframe, which is formed of ten or more symbols. Such an amount of the overhead varies depending on a number of users in a cell or a radius of a cell. The greater the number of the users in the cell; a traffic amount of data; a number of simultaneously multiplexed users per one subframe; the radius of the cell; or the like is, the greater the amount of the overhead becomes. That can be a cause of lowering throughput. Non-Patent Document 1 discloses the LTE-system, for example.

In the LTE-based mobile communication system, scheduling is performed for every subframe (TTI) of 1 ms, and control information (e.g., the PDCCH) indicating content of the allocation of the radio resources is transmitted to user equipment. After a predetermined time period is elapsed (e.g., 4 ms after the reception of the control information), the user equipment transmits an uplink signal (PUSCH) using the radio resources which are indicated by the control information. Suppose that the number of the users to which the radio resources can be assigned is N in one subframe. Since the voice data is periodically generated, the period is denoted by T. In this case, the number of the users who can simultaneously use a voice service (i.e., a voice capacity) is N × T. For example, if N = 3, and T = 20 ms, the voice capacity is equal to 3 × 20 = 60 people.

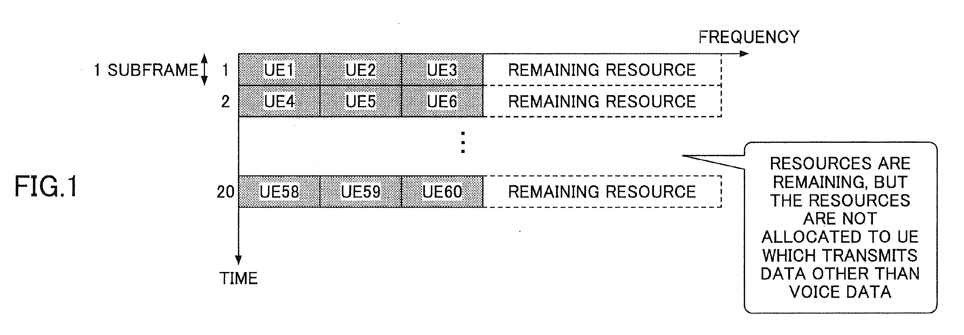

FIG. 1 shows a situation where various units of user equipment (UE1 - UE60) transmit voice data within 20 ms. As described above, since a data volume of the voice data is small, if an uplink subframe is occupied by users who transmit the voice data, a part of a usable radio resource remains, and it is wasted. Since the voice data is to be transmitted and received in real time, the voice data has higher priority relative to that of data other than the voice data. Accordingly, when users who communicate voice data and users who communicate data other than the voice data coexist, radio resources are preferentially allocated to the users of the voice data, and as shown in FIG. 1, remainders of the radio resources are generated, thereby degrading the utilization efficiency of the radio resources. In this case, if it is possible to increase a number of the users in the downlink to whom the content of the allocation of the radio resources can be communicated, such a concern may be resolved. However, in order to achieve this, it is necessary to modify the standard specification that defines a format of a downlink signal. Thus, it is not easy.

### RELATED ART DOCUMENT

### [NON-PATENT DOCUMENT]

Non-Patent Document 1: 3GPP TS36.300 V8.11.0 (2009-12)

### SUMMARY OF THE INVENTION

The base station according to one embodiment is a base station of a mobile communication system including a scheduler that generates uplink grant information, wherein the uplink grant information indicates that uplink radio resources are allocated to less than or equal to a first multiplexing number of units of user equipment; a transmitter that transmits a control signal including the uplink grant information to user equipment; and a receiver that receives an uplink signal, wherein the uplink signal is transmitted by the user equipment in accordance with the uplink grant information. When a second multiplexing number or more units of user equipment exist which transmit small data, and when user equipment exists which transmits large data, wherein the second multiplexing number is less than the first multiplexing number, the scheduler generates the uplink grant information, wherein the uplink grant information indicates that the uplink radio resources are allocated to the second multiplexing number of the units of the user equipment that transmit periodic data and to the user equipment that transmits large data.

### EFFECT OF THE PRESENT INVENTION

According to one embodiment, when the radio resource is to be allocated to the small data, the uplink radio resource can be effectively utilized.

### BRIEF DESCRIPTION OF THE DRAWINGS

FIG. 1 is a diagram showing a situation where various units of user equipment are transmitting voice data;
FIG. 2 is a functional block diagram of an eNodeB which is used in an embodiment;
FIG. 3A is a flowchart showing an operation example in the eNodeB;
FIG. 3B continues the flowchart showing the operation example in the eNodeB;
FIG. 4 is a diagram schematically showing an uplink subframe when a radio resource is allocated according to the embodiment;
FIG. 5 is a diagram schematically showing an uplink subframe when a radio resource is allocated according to the embodiment;
FIG. 6A is a flowchart showing an operation example according to a modified example;
FIG. 6B continues the flowchart showing the operation example according to the modified example;
FIG. 7 is a diagram showing that a radio resource is allocated to units of user equipment;
FIG. 8 is a diagram for illustrating another modified example;
FIG. 9A is a flowchart showing an operation example according to the other modified example;
FIG. 9B continues the flowchart showing the operation example according to the other modified example; and
FIG. 9C continues the flowchart showing the operation example according to the other modified example.

### EMBODIMENTS FOR CARRYING OUT THE INVENTION

In an embodiment which is explained below, a multiplexing number of voice users who transmit periodic data, such as voice data, is limited to a maximum voice user multiplexing number, which is in principle less than a "maximum user multiplexing number" in a subframe. Here, for the "maximum user multiplexing number," one of two cases can be considered, namely, either a case where it is fixedly defined or a case where it is defined to be a limit number of multiplexing PDCCHs. Further, for a case where a resource of a channel for transmitting control information for specifying the radio resource (PDCCH) remains, voice users who are greater in number than the maximum voice user multiplexing number may be multiplexed. By doing this, the frequency utilization efficiency is improved. The maximum voice user multiplexing number may be dynamically changed based on a number of the voice users or a utilization rate of the control channel (PDCCH) of a voice bearer. For example, for a case where the maximum user multiplexing number is four, the maximum voice user multiplexing number may be set to be three, and the maximum multiplexing number of data other than voice data may be set to be one, during busy hours. Alternatively, during non-busy hours, the maximum voice data multiplexing number may set to be two, and the maximum non-voice data multiplexing number may be set to be two. For simplicity of an explanation, an example is explained where voice data or a voice packet is utilized. However, the voice data or the voice packet is merely an example. The embodiment may be applied to all bearers for which only small data is generated. In the embodiment, a multiplexing number of voice users is limited to the maximum voice user multiplexing number, which is less than the maximum user multiplexing number. In principle, the radio resource is not allocated to voice users in excess of that number. The voice data includes voice data by retransmission (which consumes a PDCCH) as well as voice data of first transmission. In the embodiment, when the radio resource is allocated to the maximum voice user multiplexing number of the voice users, and subsequently there are no non-voice users who transmit data other than the voice data, or subsequent to allocating the radio resource to non-voice users, it is possible that radio resource remains. In such a case, the radio resource is allocated to voice users in excess of the maximum voice user multiplexing number.

Hereinafter, the embodiment is explained from the following perspectives.
1. eNodeB (base station)
2. Operation example
   2.1 A case where voice users and non-voice users coexist
   2.2 A case where only voice users exist
3. Modified example
   3.1 Modified example where retransmission is considered
   3.2 Modified example where PDCCH resource allocation amount is considered

### [Embodiment]

### <1. eNodeB (base station)>

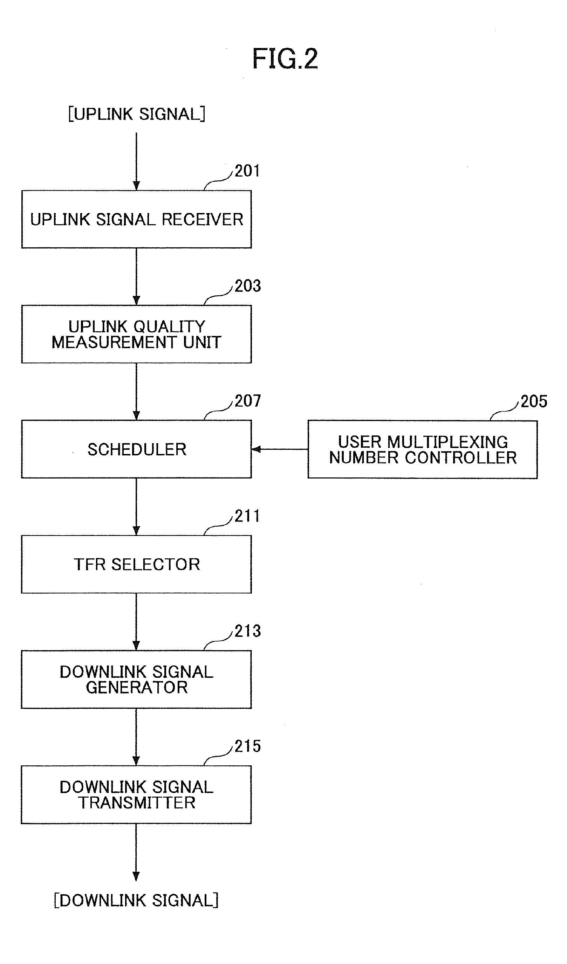

FIG. 2 shows a functional block diagram of an eNodeB (base station), which is used in the embodiment. In FIG. 2, among processors that achieve various functions included in the eNodeB of a mobile communication system, there are shown processors which are particularly related to the embodiment. For convenience of the explanation, the base station shown in the figure is, for example, an eNodeB of an LTE-based mobile communication system. The base station may be a base station of another mobile communication system. FIG. 2 shows an uplink signal receiver 201; an uplink quality measurement unit 203; a user multiplexing number controller 205; a scheduler 207; a downlink signal generator 213; and a downlink signal transmitter 215.

The uplink signal receiver 201 receives an uplink signal from user equipment (UE), and the uplink signal receiver 201 converts it into a base band signal. Accordingly, the uplink signal receiver 201 includes a function of filtering a received radio signal; a function of converting an analog signal into a digital signal; a function of demodulating data of the received signal; and a function of channel decoding the received signal. In general, an uplink signal includes a control signal, a pilot signal, a data signal, and the like. Here, the user equipment (UE) may be any suitable communication device that communicates with the eNodeB through a radio link. The user equipment may be a mobile terminal or a fixed terminal. Specifically, the user terminal (UE) may be a mobile phone, an information terminal, a high-performance mobile phone, a smart phone, a tablet computer, a personal digital assistant, a mobile computer, or the like. However, the user terminal (UE) is not limited to these.

The uplink quality measurement unit 203 measures an uplink radio channel condition. The uplink radio channel condition may be derived from a received level of the pilot signal included in the received uplink signal. The received level may be expressed in terms of any suitable quantity which is known to a person skilled in the art. As an example, the received level is broadly defined to be a quantity that represents whether a radio channel condition is good, regardless of whether it is an instantaneous value or an average value. For example, the received level may be represented by a received signal code power RSCP, reference signal received power RSRP, a path loss, SNR, SIR, SINR, Ec/N₀, RSCP, RSRQ, and/or E_{b}/N₀. The desired wave of RSCP, SNR, SIR, or SINR may be power of a shared data channel (PUSCH, PDSCH), or power of the pilot signal (a sounding reference signal (SRS), a demodulation reference signal (DMRS), a cell-specific reference signal, or a user-specific reference signal).

The user multiplexing number controller 205 controls the maximum voice user multiplexing number N_{VOICE}. which is less than the maximum user multiplexing number N_{MAX}, and the user multiplexing number controller 205 transmits it to the scheduler 207. The maximum user multiplexing number N_{MAX} is the maximum number of units of user equipment which can transmit data on the same uplink subframe. The maximum voice user multiplexing number N_{VOICE} is the maximum number of units of user equipment which can transmit synchronization data on the same uplink subframe. Periodic data is periodically generated data. Typically, it is voice data. In the explanation below, for simplicity, the explanation is given while exemplifying a case where a user communicates voice data. However, the embodiment is not limited to the voice data, and the embodiment may be applied to any communication where small-sized data is periodically generated. Even if a bearer is not periodic, the embodiment can be applied to the bearer, provided that the bearer is such that only low rate data (a small sized packet) is generated for the bearer. The maximum user multiplexing number N_{MAX} is kept to be a constant value. The maximum voice user multiplexing number N_{VOICE} may be controlled to be varied, or it can be maintained to be constant. When it is controlled to be varied, for example, it can be controlled such that the maximum user multiplexing number N_{MAX} is 4 and the maximum voice user multiplexing number N_{VOICE} is set to be 3, 2, or 1, depending on the number of the users who transmit voice data within a cell (when the number of the users who transmit the voice data is large, the maximum voice user multiplexing number N_{VOICE} is 3, and when the number of the users who transmit the voice data is small, the maximum voice user multiplexing number N_{VOICE} is 1). Specific numerical values of the maximum user multiplexing number N_{MAX} and the maximum voice user multiplexing number N_{VOICE} are merely examples, and other values may be used. Further, the maximum voice user multiplexing number N_{VOICE} may be controlled, depending not only on the number of the voice users, but also on a traffic amount.

Here, the number of the users who transmit the voice data may be set to be the number of the users for whom voice bearers are established. Alternatively, the number of the users who transmit the voice data may be set to be the number of the users who are in a talk-spurt period, among the users for whom the voice bearers are established. In general, when a person performs a conversation, a talk-spurt period, which is a generation interval, and a silent period, which is a voiceless interval, are alternately generated. In the talk-spurt period, voice data is generated at a constant period of 20 ms, for example.

The scheduler 207 determines priority of a user (user equipment) who has data to be communicated. For example, scheduling coefficients may be calculated, and users may be selected in an order of the scheduling coefficients. It is not limited to the method where the scheduling coefficients are calculated and the priority is determined. The priority may be calculated by any algorithm, provided that the priority is determined such that the voice bearers are preferentially scheduled. When the scheduler 207 determines the priority by calculating the scheduling coefficients, the scheduler 207 allocates an uplink radio resource to user equipment based on a logical channel group (Logical Channel Group: LCG) and the scheduling coefficient. The scheduling coefficient may be calculated by any suitable method based on presence or absence of a request for scheduling, the logical channel group (LCG), an instantaneous data rate, and an average data rate, for example. The logical channel group LCG is the priority in accordance with a logical channel onto which specific data is mapped. For example, the priority of the LCG which is associated with voice data is higher than that of the LCG which is associated with data of data communication. The scheduling coefficients may be calculated, for example, by a Max C/I method, or a proportional fairness method.

The eNodeB receives a notification of a quality of service (QoS) class indicator (QCI: Quality of Service Class Indicator) regarding information which is communicated by the user from a core network. This QCI represents priority on a type of traffic. The eNodeB multiplies a factor, which corresponds to the QCI, with the scheduling coefficient of the user, so that the scheduling coefficient takes a value corresponding to the priority of the QCI. Further, based on the QCI, for example, frequency of the scheduling can be controlled in accordance with the QCI. The scheduling is performed based on a plurality of the logical channel groups (LCG) corresponding to the QCI. For a case of a user having data which belongs to a low priority LCG and data which belongs to a high priority LCG, a radio resource is allocated from the data which belongs to the high priority LCG. Here, the embodiment can be applied not only to a case where the radio resource is allocated based on the scheduling coefficient, but also it can be broadly applied to a case where a voice bearer is allocated to a radio resource based on any preferential algorithm, differently from the scheduling coefficient.

The scheduler 207 preferentially allocates a radio resource to a user whose value of the scheduling coefficient is relatively large (or who is deterministically determined to have high priority). A method of allocating the radio resources in the uplink is sent to the user equipment as uplink grant information by a control signal. Detailed operations are described later. However, in general, when there exist the voice data multiplexing number N_{VOICE} of units or more units of user equipment that transmit voice data, and there exists user equipment that transmits non-periodic data which is not the voice data, the scheduler 207 allocates uplink radio resources to user equipment which transmits voice data and whose voice data multiplexing number is N_{VOICE}, and the scheduler 207 allocates the uplink radio resources to one or more units of user equipment that transmit non-periodic data.

When the scheduler 207 allocates radio resources, the radio resources are allocated to a number of units of user equipment in accordance with the priority, where the number of the units of the user equipment are calculated by subtracting a number of the units of the user equipment, which perform retransmission, from a total number of the units of the user equipment, for which scheduling coefficients are calculated. As explained in a modified example, for the allocation of the radio resource, data which is for retransmission has higher priority than that of data which is not for retransmission.

A TFR (Transport Format and Resource) selector 211 determines a transport format (a data modulation scheme and a channel coding rate) and a resource block for the user equipment, to which a radio resource is to be allocated, based on a command from the scheduler 207.

The downlink signal generator 213 generates a downlink signal including a control signal and a data signal. The control signal indicates how the radio resource is allocated to the user equipment. For a case of an LTE-based mobile communication system, the control signal includes at least a physical downlink control channel (PDCCH). To be more precisely, the channel on which the control signal is transmitted includes not only the PDCCH, but also a PCFICH which is for transmitting a format indicator (CFI), and a channel (PHICH) for transmitting acknowledgement information. Here, the format indicator (CFI) indicates a number of OFDM symbols onto which the PDCCH is mapped, and the acknowledgement information indicates acknowledgement or non-acknowledgement with respect to an uplink data signal (PUSCH) which is received by the eNodeB. The control signal in the embodiment includes uplink or downlink grant information. The uplink or the grant information includes a user's identifier to whom the radio resource is allocated and information regarding a resource block which is assigned in a downlink and/or an uplink and a data format (a data modulation scheme and a channel coding rate), for example. The data signal is mapped onto a resource block which is specified by a control signal. The data signal includes user data. In general, the data signal includes voice data (VoIP), real-time data, and data for a data communication, for example. For the case of the LTE-based mobile communication system, a data signal corresponds to a physical downlink shared channel (PDSCH) and a physical uplink shared channel (PUSCH).

The downlink signal transmitter 215 transmits a downlink signal which is generated by the downlink signal generator 213. Thus, the downlink signal transmitter 215 includes a function to apply channel coding to data to be transmitted; a function to apply data modulation to the data to be transmitted; a function to convert a digital signal into an analog signal; a function to filter the signal to be transmitted; and a function to amplify the signal to be transmitted, for example.

### <2. Operation example>

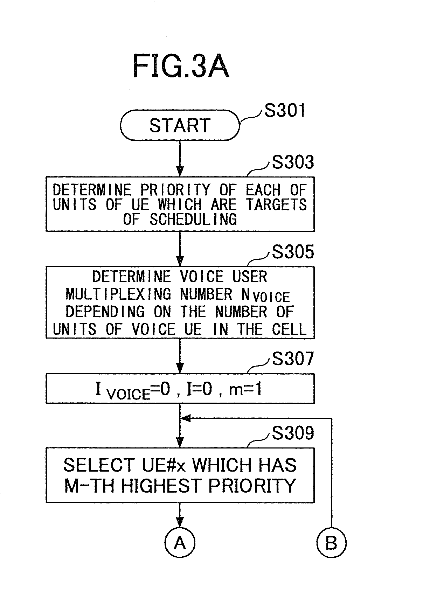

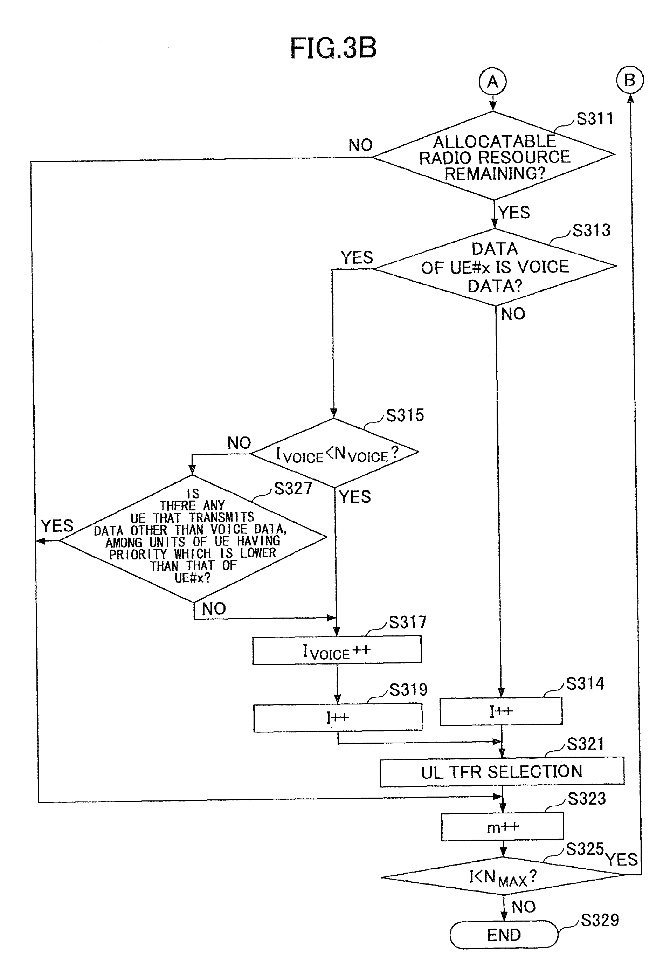

FIG. 3A and FIG. 3B are a flowchart showing an operation example of the eNodeB such as shown in FIG. 2. The flow starts from step S301, and the flow proceeds to step S303.

At step S303, the eNodeB determines priority of units of user equipment, which are targets of scheduling. Specifically, the units of the user equipment which are the targets of the scheduling are the units of the user equipment that have data to be transmitted on the uplink. The priority is determined in accordance with a logical channel group LCG and a scheduling coefficient of the data which is to be transmitted by the user equipment (UE). In general, the priority of periodic data which is periodically generated, such as voice data, is higher than the priority of non-periodic data which is not generated at periodic timing. To be more precise, a descending order of the priority corresponds to periodic data to be retransmitted; non-periodic data to be retransmitted; periodic data which is not for retransmission; and non-periodic data which is not for retransmission. Further, the priority is determined for each unit of user equipment that transmits the periodic data or the non-periodic data, depending on the scheduling coefficient. For simplicity of the explanation, the explanation is given by considering a case where a user communicates voice data as an example. However, the embodiment is not limited to the voice data, and the embodiment can be applied to a case where any periodically generated data is communicated. For example, a PING signal may be used, which is periodically transmitted for testing normality of a communication connection.

At step S305, the eNodeB determines a voice user multiplexing number N_{VOICE}, depending on a number of units of user equipment that transmit voice data among the units of the user equipment which are located within a cell. The maximum voice user multiplexing number N_{VOICE} is set to be less than the maximum user multiplexing number N_{MAX}. The maximum user multiplexing number N_{MAX} is the maximum number of the units of the user equipment that can transmit data on the same uplink subframe. The maximum voice user multiplexing number N_{VOICE} is the maximum number of the units of the user equipment that can transmit periodic data on the same uplink subframe. The voice user multiplexing number N_{VOICE} may be maintained to be constant, regardless of the number of the units of the user equipment. However, from a perspective of promoting the effective utilization of the radio resources, it is preferable that the voice user multiplexing number N_{VOICE} is adjusted depending on a number of users that communicate voice data.

In the following operation example regarding FIGS. 3A and 3B, it is assumed that the maximum user multiplexing number N_{MAX} is 3, and that the maximum voice user multiplexing number N_{VOICE} is 2.

At step S307, various types of parameters are initialized. Specifically, a number of voice users I_{VOICE} to whom radio resources are allocated is set to be 0. Here, the voice users are users who transmit voice data. A number of users I to whom radio resources are allocated is also set to be 0. A value of priority m is set to be 1. For the priority, 1 is the highest, and the priority is lowered as the number is increased. At this time, the values of the parameters are as follows.
Maximum user multiplexing number: N_{MAX} = 3 Maximum voice user multiplexing number: N_{VOICE} = 2
Number of allocated voice users: I_{VOICE} = 0
Number of allocated users: I = 0
Priority : m = 1

At step S309, the eNodeB selects the user equipment UE#x having the mth highest priority. For the case of the current example, since m = 1, the user equipment UE#x1 having the highest priority is selected. For example, when user equipment that transmits voice data and user equipment that transmits data other than the voice data coexist, the user equipment that transmits the voice data is selected.

### <2.1 A case where voice users and non-voice users coexist>

For convenience of the explanation, suppose that seven units of user equipment are targets of the scheduling. Further, suppose that the units of the user equipment UE#x1-4 having the corresponding priority m of 1-4 are the units of the user equipment that transmit the voice data, and that the units of the user equipment UE#x5-7 having the corresponding priority m of 5-7 are the units of the user equipment that transmit the non-voice data.

At step S311, the eNodeB determines whether a radio resource is remaining, which can be allocated to the user equipment. When the radio resource is remaining, the flow proceeds to step S313, and when the radio resource is not remaining, the flow proceeds to step S323.

At step S313, the eNodeB determines whether the data which is transmitted by the user equipment UE#1x1 is the voice data (more generally, periodic data). When it is the voice data, the flow proceeds to step S315. For the case of the current example, since the user equipment UE#x1 having the priority m = 1 is the user equipment that transmits the voice data, the flow proceeds to step S315.

At step S315, the eNodeB determines whether the number of the allocated voice users I_{VOICE} is less than the maximum voice user multiplexing number N_{VOICE} = 2. When the I_{VOICE} is less than N_{VOICE}, the flow proceeds to step S317. When the I_{VOICE} is not less than N_{VOICE}, the flow proceeds to step S327. For the case of the current example, since I_{VOICE} = 0, the flow proceeds to step S317.

At step S317, the number of allocated voice users I_{VOICE} is incremented, and I_{VOICE} = 1.

At step S319, the number of allocated users I is incremented, and I = 1. At step S321, the eNodeB determines a radio resource to be allocated to the user equipment UE#x1 in the target subframe and the transport format (the data modulation scheme and the channel coding rate) to be used.

At step S323, the value m of the priority is incremented, and m = 2.

At step S325, the eNodeB determines whether the number of allocated users I is less than the maximum user multiplexing number N_{MAX}. For the case of the current example, since I = 1, the flow returns to step S309. At this time, the values of the parameters are as follows.
Maximum user multiplexing number: N_{MAX} = 3
Maximum voice user multiplexing number: N_{VOICE} = 2
Number of allocated voice users: I_{VOICE} = 1
Number of allocated users: I = 1
Priority : m = 2

At step S309, the eNodeB selects the user equipment having the mth highest priority. For the case of the current example, since m = 2, the user equipment UE#x2 having the second highest priority is selected.

At step S311, the eNodeB determines whether a radio resource is remaining, which can be allocated to the user equipment. When the radio resource is remaining, the flow proceeds to step S313, and when the radio resource is not remaining, the flow proceeds to step S323.

At step S313, the eNodeB determines whether the data to be transmitted by the user equipment UE#x2 is the voice data (more generally, periodic data). When it is the voice data, the flow proceeds to step S315. For the case of the current example, since the user equipment UE#x2 having the priority m = 2 is the user equipment that transmits the voice data, the flow proceeds to step S315.

At step S315, the eNodeB determines whether the number of allocated voice users I_{VOICE} is less than the maximum voice user multiplexing number N_{VOICE} = 2. For the case of the current example, since I_{VOICE} = 1, the flow proceeds to step S317.

At step S317, the number of allocated voice users I_{VOICE} is incremented, and I_{VOICE} = 2.

At step S319, the number of allocated users I is incremented, and I = 2.

At step S321, the eNodeB determines a radio resource to be allocated to the user equipment UE#x2 and the transport format (the data modulation scheme and the channel coding rate) to be used.

At step S323, the value m of the priority is incremented, and m = 3.

At step S325, the eNodeB determines whether the number of allocated users I is less than the maximum user multiplexing number N_{MAX} = 3. For the case of the current example, since I = 2, the flow returns to step S309. At this time, the values of the parameters are as follows.
Maximum user multiplexing number: N_{MAX} = 3
Maximum voice user multiplexing number: N_{VOICE} = 2
Number of allocated voice users: I_{VOICE} = 2
Number of allocated users: I = 2
Priority : m = 3

At step S309, the eNodeB selects the user equipment having the mth highest priority. For the case of the current example, since m = 3, the user equipment UE#x3 having the third highest priority is selected.

At step S311, the eNodeB determines whether a radio resource is remaining, which can be allocated to the user equipment. When the radio resource is remaining, the flow proceeds to step S313, and when the radio resource is not remaining, the flow proceeds to step S323.

At step S313, the eNodeB determines whether the data to be transmitted by the user equipment UE#x3 is the voice data (more generally, periodic data). When it is the voice data, the flow proceeds to step S315. For the case of the current example, the user equipment UE#x3 having the priority m = 3 is the user equipment that transmits the voice data, the flow proceeds to step S315.

At step S315, the eNodeB determines whether the number of allocated voice user I_{VOICE} is less than the maximum voice data multiplexing number N_{VOICE} = 2. For the case of the current example, since I_{VOICE} = 2, unlike the above-described cases, the flow proceeds to step S327.

At step S327, the eNodeB determines whether there is user equipment that transmits data other than the voice data, among the units of user equipment, each of the units of the user equipment having priority which is lower than that of the user equipment having the mth highest priority. When such user equipment exists, the flow proceeds to step S323, and when such user equipment does not exist, the flow proceeds to step S317. For the case of the current example, since the units of the user equipment (UE#x5-7) exist which transmit the data other than the voice data, among the units of the user equipment having priority which is lower than that of the user equipment UE#x3 having the third highest priority, the flow proceeds to step S323.

At step S323, the value m of the priority is incremented, and m = 4.

At step S325, the eNodeB determines whether the number of allocated user I is less than the maximum user multiplexing number N_{MAX} = 3. For the case of the current example, since I = 2, the flow returns to step S309. At this time, the values of the parameters are as follows.
Maximum user multiplexing number: N_{MAX} = 3
Maximum voice user multiplexing number: N_{VOICE} = 2
Number of allocated voice users: I_{VOICE} = 2
Number of allocated users: I = 2
Priority : m = 4

At step S309, the eNodeB selects the user equipment having the mth highest priority. For the case of the current example, since m = 4, the user equipment UE#x4 having the 4th highest priority is selected.

At step S311, the eNodeB determines whether a radio resource is remaining, which can be allocated to the user equipment. When the radio resource is remaining, the flow proceeds to step S313. When the radio resource is not remaining, the flow proceeds to step S323.

At step S313, the eNodeB determines whether the data to be transmitted by the user equipment UE#x4 is the voice data (more generally, periodic data). When it is the voice data, the flow proceeds to step S315. For the case of the current example, the user equipment UE#x4 having the priority m = 4 is the user equipment that transmits the voice data, the flow proceeds to step S315.

At step S315, the eNodeB determines whether the number of allocated voice users I_{VOICE} is less than the maximum voice user multiplexing number N_{VOICE} = 2. For the case of the current example, since I_{VOICE} = 2, the flow proceeds to step S327.

At step S327, the eNodeB determines whether there exists user equipment that transmits data other than the voice data, among the units of the user equipment, where each of the units of the user equipment has priority which is lower than that of the user equipment having the mth highest priority. When such user equipment exists, the flow proceeds to step S323, and when such user equipment does not exist, the flow proceeds to step S317. For the case of the current example, since there exist the units of the user equipment (UE#x5-7) that transmit the data other than the voice data, among the units of the user equipment having the priority lower than that of the user equipment UE#x4 having the fourth highest priority, the flow proceeds to step S323.

At step S323, the value m of the priority is incremented, and m = 5.

At step S325, the eNodeB determines whether the number of allocated users I is less than the maximum user multiplexing number N_{MAX} = 3. For the case of the current example, since I = 2, the flow returns to step S309. At this time, the values of the parameters are as follows.
Maximum user multiplexing number: N_{MAX} = 3
Maximum voice user multiplexing number: N_{VOICE} = 2
Number of allocated voice users: I_{VOICE} = 2
Number of allocated users: I = 2
Priority : m = 5

At step S309, the eNodeB selects the user equipment having the mth highest priority. For the case of the current example, since m = 5, the user equipment UE#x5 having the 5th highest priority is selected.

At step S311, the eNodeB determines whether a radio resource is remaining, which can be allocated to the user equipment. When the radio resource is remaining, the flow proceeds to step S313, and when the radio resource is not remaining, the flow proceeds to step S323.

At step S313, the eNodeB determines whether the data to be transmitted by the user equipment UE#x5 is the voice data (more generally, periodic data). When it is the voice data, the flow proceeds to step S315. For the case of the current example, unlike the units of the user equipment UE#x1-3 having the corresponding priority m = 1-3, since the user equipment UE#x5 having the priority m = 5 is the user equipment that transmits the data other than the voice data, flow proceeds to step S314.

At step S314, the number of allocated users I is incremented, and I = 3.

At step S321, the eNodeB determines the radio resource allocated to the user equipment UE#x5 and the transport format to be used (the data modulation scheme and the channel coding rate).

At step S323, the value m of the priority is incremented, and m = 6.

At step S325, the eNodeB determines whether the number of allocated user I is less than the maximum user multiplexing number N_{MAX} = 3. For the case of the current example, since I = 3, the flow proceeds to step S329, and it is terminated.

As a consequence, the eNodeB generates uplink grant information indicating that the radio resources are allocated to the user equipment UE#x1 (voice user), the user equipment UE#x2 (voice user), and the user equipment UE#x5 (non-voice user), and transmits it to the user equipment. The eNodeB receives uplink signals which are transmitted by the units of the user equipment in accordance with the uplink grant information.

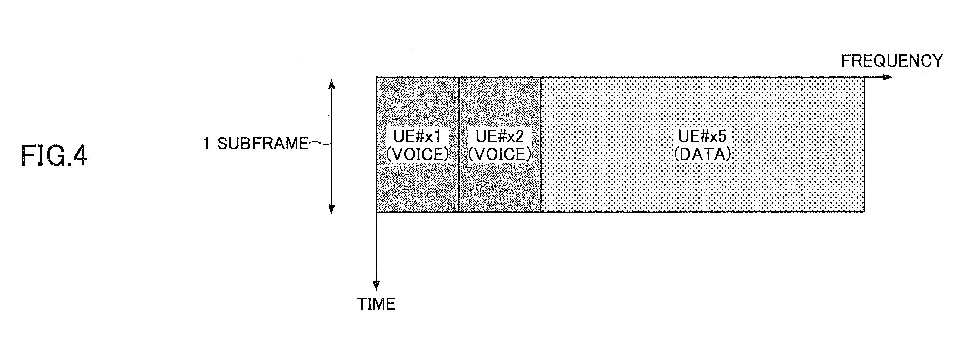

FIG. 4 schematically shows an uplink subframe which is transmitted by the units of the user equipment in accordance with the uplink grant information. The uplink signal includes the voice data of the user equipment UE#x1, the voice data of the user equipment UE#x2, and the data other than the voice data of the user equipment UE#x5. Unlike the conventional case, even if the number of the units of the user equipment that transmit the voice data is greater than the maximum voice user multiplexing number N_{VOICE}. the number of the voice users who are multiplexed in the subframe is regulated to be the maximum voice user multiplexing number N_{VOICE}. Instead, the remaining radio resource is allocated to the user equipment which transmits the data other than the voice data. In this manner, by regulating the number of the units of the user equipment which transmit the voice data to be less than the maximum user multiplexing number N_{MAX}, the utilization efficiency of the uplink radio resources can be improved.

### <2.2 A case where only voice users exist>

In the above-described example, the units of the user equipment UE#x1-4 that transmit the voice data and the units of the user equipment UE#x5-7 that transmits the data other than the voice data coexist. When it is assumed that only the units of the user equipment UE#x1-4 exist, the radio resources are allocated to the units of the user equipment UE#x1-3. In such a case the flow proceeds from step S327 to step S317.

To be more specific, the flow is as follows. First, the radio resources are allocated to the user equipment UE#x1 of m = 1 and to the user equipment UE#x2 of m = 2 in the same manner as described above, and the flow returns to step S309. At this time, the values of the parameters are as follows.
Maximum user multiplexing number: N_{MAX} = 3
Maximum voice user multiplexing number: N_{VOICE} = 2
Number of allocated voice users: I_{VOICE} = 2
Number of allocated users: I = 2
Priority : m = 5

At step S309, the eNodeB selects the user equipment having the mth highest priority. For the case of the current example, since m = 3, the user equipment UE#x3 having the 3rd highest priority is selected.

At step S311, the eNodeB determines whether a radio resource is remaining, which can be allocated to the user equipment. When the radio resource is remaining, the flow proceeds to step S313, and when the radio resource is not remaining, the flow proceeds to step S323.

At step S313, the eNodeB determines whether the data to be transmitted by the user equipment UE#x3 is the voice data (more generally, periodic data). When it is the voice data, the flow proceeds to step S315. For the case of the current example, since the user equipment UE#x3 having the priority m = 3 is the user equipment that transmits the voice data, the flow proceeds to step S315.

At step S315, the eNodeB determines whether the number of allocated voice users I_{VOICE} is less than the maximum voice user multiplexing number N_{VOICE} = 2. For the case of the current example, since I_{VOICE} = 2, the flow proceeds to step S327.

At step S327, the eNodeB determines whether there exists user equipment that transmits data other than the voice data, among the units of the user equipment, where each of the units of the user equipment has priority which is lower than that of the user equipment UE#x having the mth highest priority. When such user equipment exists, the flow proceeds to step S323. When such user equipment does not exist, the flow proceeds to step S317. For the case of the current example, the user equipment having priority which is lower than that of the user equipment UE#x3 having the 3rd highest priority is only UE#x4, and this user equipment transmits the voice data. Consequently, the flow proceeds to step S317.

At step S317, the number of allocated users I_{VOICE} is incremented, and I_{VOICE} = 3.

At step S319, the number of allocated users I is incremented, and I = 3.

At step S321, the eNodeB determines the radio resource which is allocated to the user equipment UE#x3 and the transport format to be used (the data modulation scheme and the channel coding rate).

At step S323, the value m of the priority is incremented, and m = 4.

At step S325, the eNodeB determines whether the number of allocated user I is less than the maximum user multiplexing number N_{MAX} = 3. For the case of the current example, since I = 3, the flow proceeds to step S329, and it is terminated.

As a result, the eNodeB generates uplink grant information indicating that the radio resources are allocated to the user equipment UE#x1 (voice user), the user equipment UE#x2 (voice user), and the user equipment UE#x3 (voice user), and the eNodeB transmits it to the units of the user equipment. The eNodeB receives uplink signals which are transmitted by the units of the user equipment in accordance with the uplink grant information.

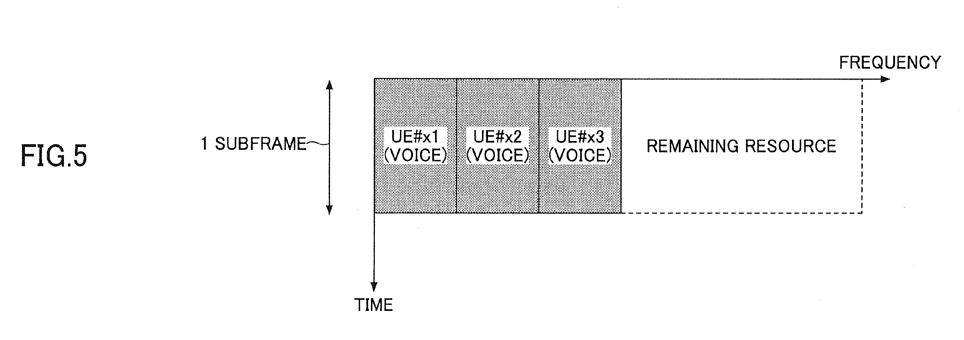

FIG. 5 schematically shows an uplink subframe that is transmitted by the units of the user equipment in accordance with such uplink grant information. The uplink signals include the voice data of the units of the user equipment UE#x1-3. In this case, the radio resource is remaining. However, since there is no user equipment that transmits data other than the voice data, it is not wasted so severely.

### <3. Modified example>

### <<3.1 Modified example where retransmission is considered>>

When the uplink radio resources are allocated to the units of the user equipment in accordance with the priority, the priority of the data to be retransmitted is higher than that of the data not to be retransmitted. Accordingly, in general, the priority is lowered in accordance with an order of first user equipment that retransmits periodic data, second user equipment that retransmits non-periodic data, third user equipment that transmits periodic data which is not for retransmission, and fourth user equipment that transmits non-periodic data which is not for retransmission. When the eNodeB allocates radio resources to units of the user equipment up to the maximum user multiplexing number N_{MAX}, the total number of the units of the first and third user equipment to which the radio resources are allocated is regulated to be the maximum voice user multiplexing number N_{VOICE}. even if the number of the units of the first and third user equipment is greater than the maximum voice user multiplexing number N_{VOICE}.

In general, there are two types of retransmission. One of them is such that a number of resource blocks for the retransmission and a MCS (a combination of a data modulation scheme and a channel coding rate) are specified by a control signal (PDCCH), and the retransmission is performed by the specified ones. For convenience, this method of retransmission is referred to as "grant retransmission." For the case of the grant retransmission, the user equipment receives the PDCCH, and subsequent to a predetermined time period elapsing (for example, after 4 ms), retransmission is performed by using the number of the resource blocks and the MCS, which are specified by the PDCCH. The other retransmission does not use the control signal (PDCCH). When the user equipment receives acknowledgement information indicating the non-acknowledgement (NACK) from the eNodeB through the control signal (PHICH), subsequent to a predetermined time period elapsing (for example, after 4 ms), retransmission is performed by using the number of the resource blocks and the MCS, which are the same as those of the previous time. For convenience, this retransmission method is referred to as the "PHICH retransmission." Namely, for the case of the PHICH retransmission, the eNodeB can inform the user equipment to perform retransmission without using a PDCCH resource. Namely, when the eNodeB allocates radio resources to units of the user equipment up to the maximum user multiplexing number N_{MAX} in accordance with the priority, and when a radio resource is allocated for the grant retransmission, it is necessary to increase the number of allocated users I_{VOICE}. Whereas, for a case where a radio resource is allocated for the PHICH retransmission, it is not necessary to increase the number of allocated voice users I_{VOICE}. That is because the number of allocated voice users I_{VOICE} can be said to be the number of the voice users that use the PDCCH resources, in other words. Accordingly, when the eNodeB allocates radio resources for the PHICH retransmission of specific user equipment, radio resources to be allocated to different user equipment can be specified by using PDCCH resources, which are not utilized yet.

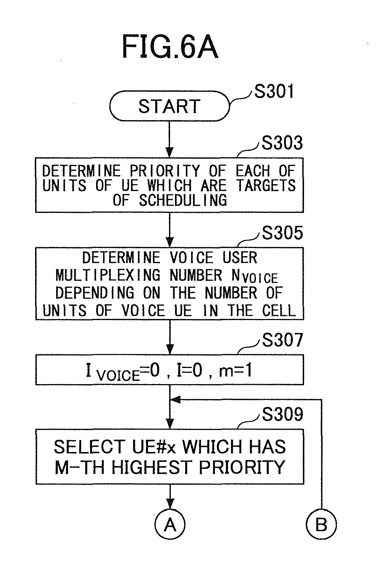

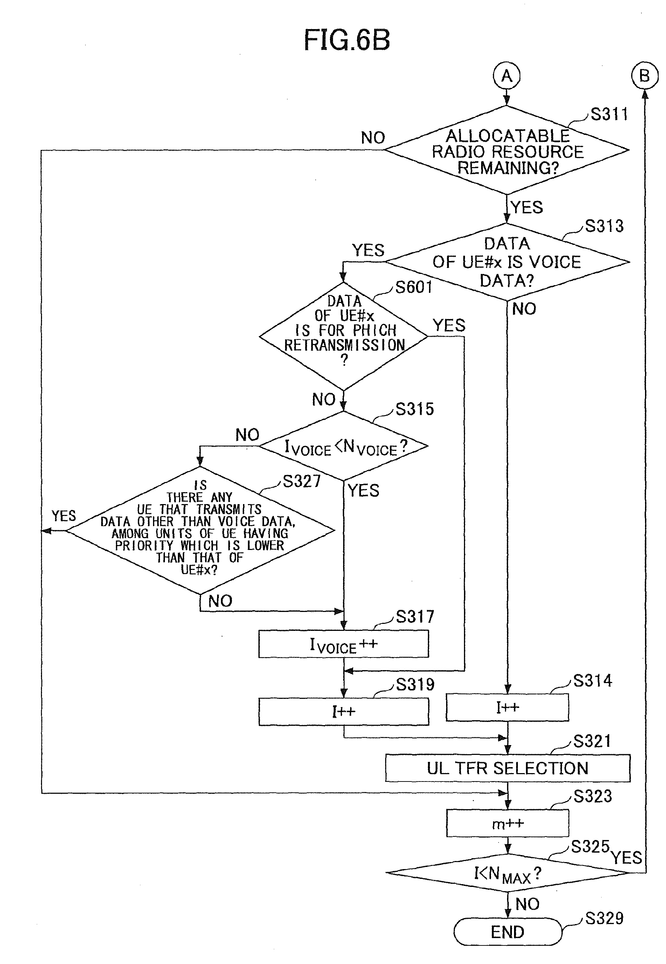

FIG. 6A and FIG. 6B show a flowchart of an operation example, which is used in this modified example. It is substantially the same as that of shown in FIG. 3A and FIG. 3B. However, it is different in a point that step S601 is added. At step S601, when data of user equipment UE#x is not to be transmitted by the PHICH retransmission, the flow proceeds to step S315, and the already explained processes are performed. Specifically, the case other than the PHICH retransmission is a case where it is the grant retransmission or it is not retransmission. When the PHICH retransmission is performed, the flow proceeds to step S319, and the number of allocated users I is incremented, and the radio resources are ensured at step S321. After that, the already explained processes are performed.

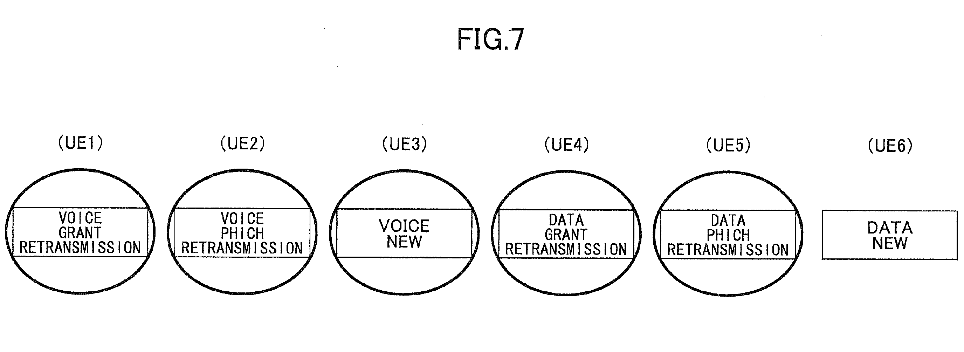

As described above, the user equipment transmits periodic data such as voice data or non-periodic data by the grant retransmission, the PHICH retransmission, or new transmission. As shown in FIG. 7, suppose that first user equipment UE1 that transmits periodic data by the grant retransmission, second user equipment UE2 that transmits periodic data by the PHICH retransmission, third user equipment UE3 that transmits periodic data by new transmission, fourth user equipment UE4 that transmits non-periodic data by the grant retransmission, fifth user equipment UE5 that transmits non-periodic data by the PHICH retransmission, and sixth user equipment UE6 that transmits non-periodic data by new transmission exist. It is assumed that the priority in the descending order is UE1, UE2, UE4, UE5, UE3, and UE6. In this case, UE1, UE3, UE4, and UE6 use the PDCCH resource for allocation of the radio resources. Since data of UE2 and UE5 are transmitted by the PHICH retransmission, the PDCCH resource is not necessary. Suppose that grant information for radio resources for three users can be included in the PDCCH. In this case, in the uplink, the data of UE1-5 can be multiplexed by using the PDCCH resource for UE1, UE3, and UE5, and by performing the PHICH retransmission for the UE2 and UE5

### <<3.2 Modified example where PDCCH resource allocation amount is considered>>

The control signal for allocating the radio resource of the downlink or the uplink shared channel is transmitted to each of the units of the user equipment by the PDCCH. The PDCCH included in one subframe (a unit transmission time period or a transmission time interval TTI) may include control information which is addressed to a plurality of units of the user equipment. In this case, the amount of the PDCCH radio resource used for each of the units of the user equipment is not necessarily the same. That is because the amount of the radio resource which is required for maintaining the receiving quality of the PDCCH (for example, a receiving error rate) differs depending on a communication condition of each of the units of the user equipment. For example, for a case of user equipment located in the vicinity of the eNodeB, since the radio channel condition is good, required quality can be satisfied even if the channel coding rate is high. Thus, in this case, the amount of the PDCCH radio resource can be small. Conversely, for a case of user equipment at an edge of a cell, since the radio channel condition is poor, the required quality may not be satisfied, unless the channel coding rate is set to be low. Accordingly, in this case, a large amount of the PDCCH radio resource is required. For the case of the LTE-based mobile communication system, the PDCCH radio resource is allocated to each unit of the user equipment in a unit which is called a "control channel element (CCE)." One CCE corresponds to nine resource element groups (REGs). For example, as specific numbers of the CCE, 1(2/3), 2(1/3), 4(1/6), and 8(1/12) are considered. The numbers in the brackets are channel coding rates.

From such a perspective, instead of using the maximum user multiplexing number and the maximum voice user multiplexing number as in the explanation of the operation example, the units of the user equipment to be multiplexed to the PDCCH may be determined by considering the whole amount of the PDCCH radio resource and the amount of the PDCCH radio resource for the voice users. This modified example determines the units of the user equipment that can use the shared data channel from such a perspective.

For example, suppose that three of OFDM symbols which are included in one subframe are used for a control channel (CFI = 3), the system bandwidth is 5 MHz, and the number of REGs that can be used for the PDCCH is 184. In this case, since 1 CCE = 9 REGs, there are 20 CCEs (184÷9). Among these 20 CCEs, suppose that 12 CCEs are allocated to voice users. Further, suppose that there are three voice users (UE#A, UE#B, and UE#C), and that there are two data communication users. UE#A, UE#B, and UE#E are located at an edge of a cell, and eight CCEs are required. UE#C is located in the vicinity of the eNodeB, and one CCE is good enough. UE#D is located at a position which is separated from the eNodeB compared to the vicinity of the eNodeB, but it does not reach the edge of the cell, and four CCEs are required. Among these units of user equipment, suppose that the priority in the descending order is UE#A, UE#B, UE#C, UE#D, and UE#E.

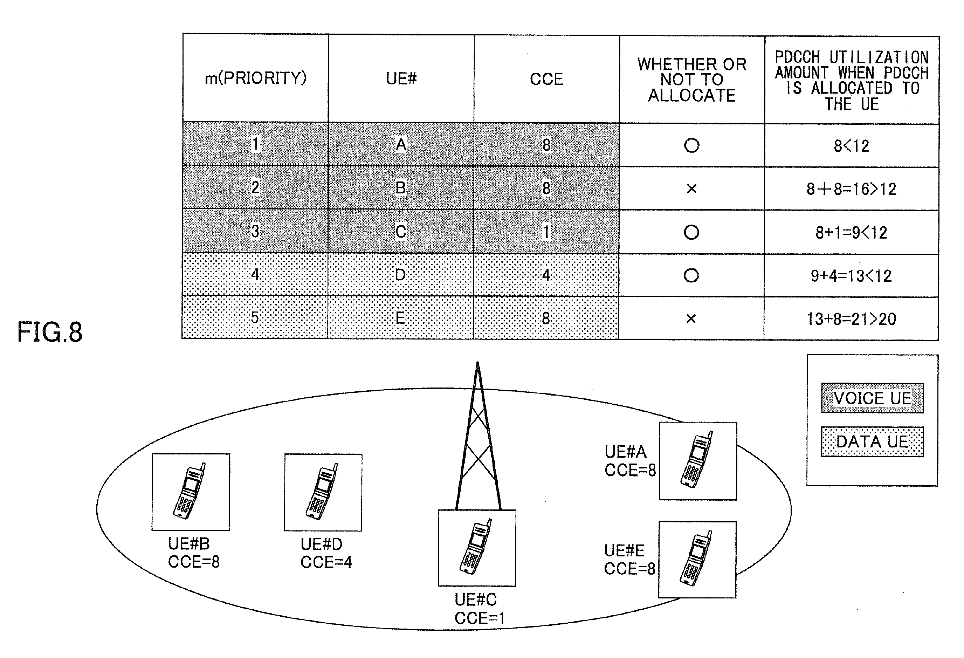

FIG. 8 shows a situation of the specific example. In this modified example, basically, it is attempted to allocate the PDCCH radio resources in accordance with the descending order of the priority. When the PDCCH radio resources are allocated, radio resources of a shared data channel are allocated.

First, it is attempted to allocate the PDCCH radio resources to the user equipment UE#A of a voice user having the priority m = 1. For the case of the user equipment UE#A, 8 CCEs are required. Since this is less than the upper limit value of 12, the PDCCH radio resources are allocated to the user equipment UE#A of the voice user.

Next, it is attempted to allocate the PDCCH radio resources to the user equipment UE#A of a voice user having the priority m = 2. The user equipment UE#B also requires 8 CCEs. However, the total number of the CCEs for allocating the PDCCH radio resources to the units of the user equipment UE#A and B is 8 + 8 = 16, and it exceeds the upper limit value 12. Accordingly, the PDCCH radio resources are not allocated to the user equipment UE#B of the voice user.

Next, it is attempted to allocate the PDCCH radio resource to the user equipment UE#C of the voice user having the priority m = 3. For the case of the user equipment UE#C, one CCE is required. The total number of the CCEs which are required for allocating the PDCCH radio resources to the units of the user equipment UE#A and C is 8 + 1 = 9, and it is less than the upper limit value of 12. Accordingly, the PDCCH radio resource is allocated to the user equipment UE#C for the voice user.

Next, it is attempted to allocate the PDCCH radio resources to the user equipment UE#D of a data communication user having the priority m = 4. For the case of the user equipment UE#D, four CCEs are required. The total number of the CCEs which are required for allocating the PDCCH radio resources to the units of the user equipment UE#A, C, and D is 9 + 4 = 13. Since the user equipment UE#D is for a data communication user, the maximum number 20 of the CCEs is considered. For the case of the current example, the total number of the CCEs which are required for allocating the PDCCH radio resources to the units of the user equipments UE#A, C, and D is 13, and it is less than the upper limit value 20. Accordingly, the PDCCH radio resources are allocated to the user equipment UE#D of the voice user.

Finally, it is attempted to allocate the PDCCH radio resources to the user equipment UE#E of a data communication user having the priority m = 5. For the case of the user equipment UE#E, 8 CCEs are required. The total number of the CCEs which are required for allocating the PDCCH radio resources to the unit of the user equipment UE#A, C, D, and E is 13 + 8 = 21, and it exceeds the upper limit value 20. Accordingly, the PDCCH radio resources are not allocated to the user equipment UE#E of the voice user.

In this manner, by regulating the PDCCH radio resources (the number of the CCEs), which are allocated to the voice users, the radio resources which are included in the subframe can be effictively utilized.

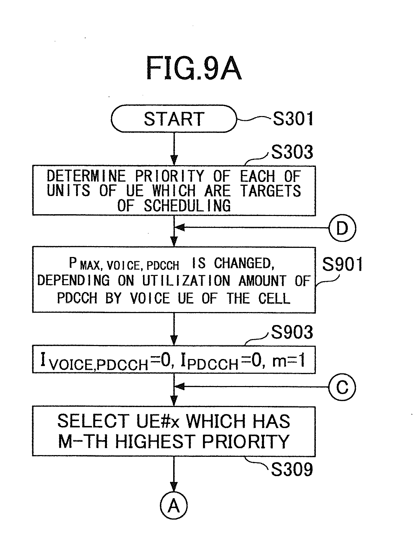

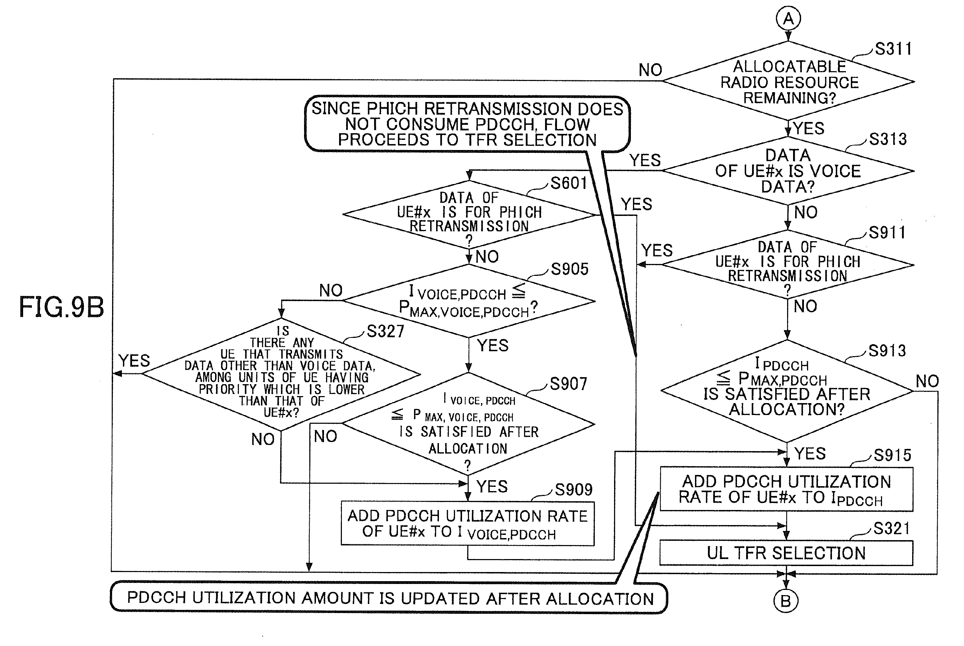

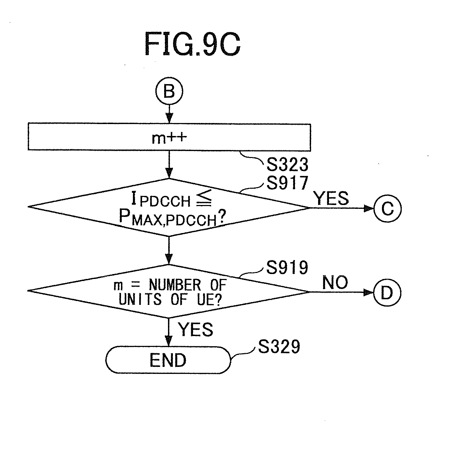

FIG. 9A, FIG. 9B, and FIG. 9C show an operation example for a case in which the radio resources are allocated to the user equipment according to the modified example. In general, there are steps which are the same as those of FIG. 3A and FIG. 3B, and those of FIG. 6A and FIG. 6B. The same reference numerals are attached to them. In the modified example, the PDCCH radio resources which are allocated to the voice users are regulated to be less than or equal to a constant amount. Thus, parameters which are different from those of FIG. 6A and FIG. 6B are utilized. Specifically, at step S901, the upper limit value (the number of the CCEs) P_{MAX, VOICE, PDCCH} of the PDCCH radio resource amount, which can be allocated to the voice users, is set to be a specific value. The value which is to be set may be a fixed value, similar to the case of the voice user multiplexing number N_{VOICE}, or the value may be controlled to be varied, depending on the number of the voice users in the cells. Further, the PDCCH radio resource amount (the number of CCEs) I_{VOICE, PDCCH}, which is actually allocated to the voice user is set to be 0. The allocated PDCCH radio resource amount (the number of CCEs) I_{PDCCH}, which is actually allocated irrespectively of whether it is the voice data or not, is set to be 0. The value m of the priority is set to be 1.

In the modified example, for the case of the voice user, the flow reaches step S601, and if it is not the PHICH retransmission, the flow proceeds to step S905. For the case of the PHICH retransmission, since the PDCCH radio resource is not utilized, the flow proceeds to step S321, and the already explained processes are executed.

At step S905, a determination is made as to whether the PDCCH radio resource amount (the number of CCEs) I_{VOICE, PDCCH} which is actually allocated to the voice users is less than or equal to the upper limit value (the number of CCEs) of the PDCCH radio resource amount P_{MAX, VOICE, PDCCH} which can be allocated to the voice users. When it exceeds the upper limit value, the flow proceeds to step S327, and the already explained processes are executed. When it does not exceed the upper limit value, the flow proceeds to step S907.

At step S907, a determination is made as to whether the radio resource amount I_{VOICE, PDCCH} which is required if the PDCCH radio resources are to be allocated to the target units of the user equipment, is less than or equal to the upper limit value (the number of CCEs) P_{MAX, VOICE, PDCCH} of the PDCCH radio resources which can be allocated to the voice users. If the required radio resource amount exceeds the upper limit value, the flow proceeds to step S323, and the PDCCH radio resources are not allocated to the target units of the user equipment. If the required radio resource amount does not exceed the upper limit value, the flow proceeds to step S909.

At step S909, the PDCCH radio resource amount (the number of CCEs) I_{VOICE, PDCCH} which is actually allocated to the voice users is incremented by an amount which is allocated to the target units of the user equipment.

At step S911, the PDCCH radio resource amount (the number of CCEs) I_{PDCCH}, which is actually allocated irrespectively of whether the users are voice users, is incremented by an amount which is allocated to the target units of the user equipment.

At step S323, the PDCCH radio resources are allocated to the target units of the user equipment, and the radio resources of the shared data channel are also ensured.

For the case where data is other than the voice data, the flow reaches step S911.

At step S911, if it is not the PHICH retransmission, the flow proceeds to step S913. For the case of the PHICH retransmission, since the PDCCH radio resources are not utilized, the flow proceeds to step S321, and the already explained processes are executed.

At step S913, a determination is made as to whether the radio resource amount I_{VOICE}, which is required if the PDCCH radio resources are allocated to the target units of the user equipment, is less than or equal to the upper limit value (the number of CCEs) P_{MAX, VOICE PDCCH} of the PDCCH radio resource amount which can be allocated regardless of whether it is the voice user. When the required radio resource amount exceeds the upper limit value, the flow proceeds to step S323, and the PDCCH radio resources are not allocated to the target units of the user equipment. When the required radio resource amount does not exceed the upper limit value, the flow proceeds to step S915.

At step S915, the PDCCH radio resource amount (the number of CCEs) I_{PDCCH}, which is actually allocated to the users, is incremented by an amount which is allocated to the target units of the user equipment.

At step S323, the PDCCH radio resources are allocated to the target units of the user equipment, and the radio resources of the shared data channel are also ensured.

At step S917, a determination is made as to whether the PDCCH radio resource amount (the number of CCEs) I_{PDCCH}, which is actually allocated to the users, is less than or equal to the PDCCH radio resource amount P_{MAX, PDCCH}. When the allocated radio resource amount is less than or equal to the PDCCH radio resource amount, the flow returns to step S309, and the already explained processes are executed. When the allocated radio resource amount is less than or equal the PDCCH radio resource amount, the flow proceeds to step S919.

At step S919, a determination is made as to whether the priority m which corresponds to the total number (number of units of UE) of the units of the user equipment which request allocation of the radio resources. When m is not equal to the number of the units of the UE, the flow returns to step S901, and the already explained processes are executed. When m = the number of the units of the UE, the flow proceeds to step S329, and it is terminated.

By performing such operations, the voice user multiplexing number can be regulated from the perspective of the PDCCH radio resource.

Hereinabove, the present invention is explained by referring to the specific embodiments. However, the embodiments are merely illustrative, and variations, modifications, alterations and substitutions could be conceived by those skilled in the art. For example, the present invention may be applied to any suitable mobile communication system that transmits and receives voice data. Specific examples of numerical values are used in order to facilitate understanding of the invention. However, these numerical values are simply illustrative, and any other appropriate values may be used, except as indicated otherwise. Specific examples of the formulas have been used in order to facilitate understanding of the invention. However, these formulas are simply illustrative, and any other appropriate formulas may be used, except as indicated otherwise. The separations of the embodiments or the items are not essential to the present invention. Depending on necessity, subject matter described in two or more items may be combined and used, and subject matter described in an item may be applied to subject matter described in another item (provided that they do not contradict). For the convenience of explanation, the devices according to the embodiments of the present invention are explained by using functional block diagrams. However, these devices may be implemented in hardware, software, or combinations thereof. The software may be prepared in any appropriate storage medium, such as a random access memory (RAM), a flash memory, a read-only memory (ROM), an EPROM, an EEPROM, a register, a hard disk drive (HDD), a removable disk, a CD-ROM, a database, a server, and the like. The present invention is not limited to the above-described embodiments, and various variations, modifications, alterations, substitutions and so on are included, without departing from the spirit of the present invention.

The present international application is based on and claims the benefit of priority of Japanese Patent Application No. 2011-101948, filed on April 28, 2011, the entire contents of which are hereby incorporated by reference.

### LIST OF REFERENCE SYMBOLS

201: Uplink signal receiver
203: Uplink quality measurement unit
205: User multiplexing number controller
207: Scheduler
211: TFR selector
213: Downlink signal generator
215: Downlink signal transmitter

## Claims

1. A base station of a mobile communication system, the base station comprising:
a scheduler that generates uplink grant information, wherein the uplink grant information indicates that uplink radio resources are allocated to less than or equal to a first multiplexing number of units of user equipment;
a transmitter that transmits a control signal including the uplink grant information to the user equipment; and
a receiver that receives an uplink signal, wherein the uplink signal is transmitted by the user equipment in accordance with the uplink grant information,
wherein, when a second multiplexing number or more units of user equipment exist which transmit periodic data which is periodically generated, when user equipment exists which transmits non-periodic data which is generated at non-periodic timing, and when the second multiplexing number is less than the first multiplexing number, the scheduler generates the uplink grant information, the uplink grant information indicating that the uplink radio resources are allocated to the second multiplexing number of the units of the user equipment that transmit periodic data and to the user equipment that transmits non-periodic data.

2. The base station according to claim 1, further comprising:
a user multiplexing number controller that controls the second multiplexing number depending on the number of the units of the user equipment which transmit the periodic data in a cell of the base station.

3. The base station according to claim 1,
wherein, when the scheduler allocates the radio resources to the units of the user equipment up to the first multiplexing number in accordance with an order of priority of first user equipment that transmits the periodic data, second user equipment that transmits the non-periodic data, third user equipment that transmits the periodic data which is not for retransmission, and fourth user equipment that transmits the non-periodic data which is not for the retransmission, and when a number of the units of the first user equipment and the third user equipment is greater than the second multiplexing number, a total number of the units of the first user equipment and the third user equipment to which the radio resources are allocated is limited to be the second multiplexing number.

4. The base station according to claim 1,
wherein, when the second multiplexing number or more units of the user equipment that transmit the periodic data exist, and when a third multiplexing number of units of the user equipment that transmit the non-periodic data exist, if the radio resources which can be allocated are remaining, subsequent to allocating the radio resources to the second multiplexing number of the units of the user equipment and to the third multiplexing number of the units of the user equipment, the scheduler generates the uplink grant information indicating that the uplink radio resources are allocated to more than the second multiplexing number of the units of the user equipment that transmit the periodic data and to the third multiplexing number of the units of the user equipment that transmit the non-periodic data.

5. The base station according to claim 1,
wherein the periodic data is voice data.

6. A resource allocation method comprising:
a step of generating uplink grant information, wherein the uplink grant information indicates that uplink radio resources are allocated to less than or equal to a first multiplexing number of units of user equipment;
a step of transmitting a control signal including the uplink grant information to the user equipment; and
a step of receiving an uplink signal, wherein the uplink signal is transmitted by the user equipment in accordance with the uplink grant information,
wherein, when a second multiplexing number or more units of user equipment exist which transmit periodic data which is periodically generated, when user equipment exists which transmits non-periodic data which is generated at non-periodic timing, and when the second multiplexing number is less than the first multiplexing number, the step of generating uplink grant information generates the uplink grant information, the uplink grant information indicating that the uplink radio resources are allocated to the second multiplexing number of the units of the user equipment that transmit periodic data and to the user equipment that transmits non-periodic data.
